# EUROPÄISCHE PATENTSCHRIFT

(11) **EP 3 233 592 B1**
(45) Veröffentlichungstag und Bekanntmachung des Hinweises auf die Patenterteilung: **30.01.2019**
(21) Anmeldenummer: 15813751.3
(22) Anmeldetag: 11.12.2015
(51) Int. Cl.: B60S 5/06, B60L 11/18

(54) **VERFAHREN ZUM WECHSELN VON FAHRZEUGENERGIESPEICHERN UND ENERGIESPEICHERWECHSELEINRICHTUNG**
METHOD FOR CHANGING VEHICLE ENERGY STORES, AND ENERGY STORE CHANGING DEVICE
PROCÉDÉ SERVANT À CHANGER DES RÉSERVOIRS D'ÉNERGIE DE VÉHICULE, ET SYSTÈME DE CHANGEMENT DE RÉSERVOIR D'ÉNERGIE

(30) Priorität: 18.12.2014 DE 102014226372
(43) Veröffentlichungstag der Anmeldung: 25.10.2017
(73) Patentinhaber: KUKA Systems GmbH, 86165 Augsburg (DE)
(72) Erfinder: NEIDER, Reinhold, 86462 Langweid (DE); MAYR, Stefan, 86316 Friedberg/Haberskirch (DE)
(74) Vertreter: Mader, Joachim
(86) Internationale Anmeldenummer: PCT/EP2015/079480
(87) Internationale Veröffentlichungsnummer: WO 2016/096670

(56) Entgegenhaltungen:
- WO-A1-2013/144948
- WO-A1-2013/144958
- DE-T5-112012 004 251

## Beschreibung

### 1. Gebiet der Erfindung

Die Erfindung betrifft ein Verfahren zum Wechseln zumindest eines Energiespeichers eines Fahrzeugs mittels einer Energiespeicherwechseleinrichtung, welches Verfahren ein schnelles Wechseln des Energiespeichers eines, zumindest teilweise elektrisch betriebenen Fahrzeugs ermöglicht.

### 2. Hintergrund

Elektrisch betriebene Fahrzeuge oder teilweise elektrisch betriebene Fahrzeuge, wie beispielsweise Hybridfahrzeuge, gewinnen stetig an Bedeutung. Diese Fahrzeuge zeichnen sich durch eine geringe Geräuschimmission und einen geringeren Schadstoffausstoß aus, was insbesondere in Städten vorteilhaft ist. Überdies ermöglichen elektrisch betriebene Fahrzeuge die Nutzung erneuerbarer Energien für die Fortbewegung. Somit kann der CO₂ Ausstoß reduziert werden.

Allerdings sind rein elektrisch betriebene Fahrzeuge für längere Strecken aufgrund der geringen Reichweite und der relativ langen Ladezeiten der mitgeführten Energiespeicher, wie beispielsweise Batterien, zur Zeit weiniger geeignet. Deshalb statten Fahrzeughersteller elektrisch betreibbare Fahrzeuge häufig mit einem zusätzlichen Verbrennungsmotor (Hybridfahrzeuge) aus. Diese ermöglichen das rein elektrische Fahren mit begrenzter Reichweite und schalten z.B. bei entleertem elektrischem Energiespeicher auf einen verbrennungsmotorischen Betrieb um. Heutige rein elektrisch betriebene Fahrzeuge sind in ihrer Reichweite begrenzt und benötigen eine Ladezeit von mehreren Stunden. Damit eignen sich diese rein elektrisch betriebenen Fahrzeuge insbesondere für die innerstädtische Nutzung und für Pendler.

Um das Einsatzgebiet von elektrisch betriebenen Fahrzeugen zu erweitern, ist es notwendig den Nachteil der langen Ladezeiten der Energiespeicher zu vermeiden. Hierzu sind Konzepte von Wechselstationen bekannt, welche den einfachen und schnellen Austausch der entladenen Energiespeicher des Fahrzeugs durch einen geladenen Energiespeicher ermöglichen. Der entladene Energiespeicher kann dann auf herkömmliche Weise, also über einen Zeitraum von mehreren Stunden, wieder geladen werden. Somit ist die lange Ladezeit des Energiespeichers nicht mehr an den Betrieb des Fahrzeugs geknüpft, und das Fahrzeug ist nach dem Energiespeicherwechsel sofort wieder fahrbereit.

Die WO 2013/144948 A1 wird als nächstliegender Stand der Technik gegenüber dem Gegenstand der unabhängigen Ansprüche 1 und 10 angesehen.

Aufgabe der vorliegenden Erfindung ist es, ein verbessertes Verfahren und eine verbesserte Energiespeicherwechseleinrichtung bereitzustellen, um einen schnellen und sicheren Wechsel des/der Energiespeicher eines Fahrzeugs zu ermöglichen.

### 3. Ausführliche Beschreibung der Erfindung

Die oben genannten Aufgaben werden durch ein erfindungsgemäßes Verfahren zum Wechseln zumindest eines Energiespeichers eines Fahrzeugs gemäß Anspruch 1 und durch eine

Energiespeicherwechseleinrichtung gemäß Anspruch 10 gelöst. Insbesondere werden die oben genannten Aufgaben gelöst durch ein Verfahren zum Wechseln zumindest eines Energiespeichers eines Fahrzeugs, umfassend die folgenden Verfahrensschritte:
Ermitteln des Fahrzeugtyps;
Bereitstellen von Fahrzeugdaten des ermittelten Fahrzeugtyps, umfassend Daten über die Anordnung des zumindest einen Energiespeichers im Fahrzeug;
Bestimmung von räumlichen Referenzpunkten am Fahrzeug anhand der Fahrzeugdaten des ermittelten Fahrzeugtyps;
Ermitteln der aktuellen Position des Fahrzeugs anhand von zumindest einem räumlichen Referenzpunkt;
Wechseln zumindest eines zu wechselnden Energiespeichers des Fahrzeugs.

Das Verfahren zum Wechseln zumindest eines Energiespeichers eines Fahrzeugs ermöglicht einen schnellen Wechsel des Energiespeichers für beliebige Fahrzeugtypen. Durch das Erkennen des Fahrzeugtyps und das Bereitstellen von Fahrzeugdaten des ermittelten Fahrzeugtyps ist der Energiespeicherwechsel auch dann möglich, wenn die Anordnung des Energiespeichers im Fahrzeug für unterschiedliche Fahrzeugtypen nicht einheitlich realisiert ist. Das Verfahren ist somit unabhängig von einem spezifischen Fahrzeugtyp und zudem einfach an neue Fahrzeugtypen anpassbar.

Energiespeicher sind Vorrichtungen, die Energie mit dem Ziel der elektrischen, chemischen, elektrochemischen, mechanischen und/oder thermischen Speicherung aufnehmen und zu einer zeitlich verzögerten Nutzung wieder zur Verfügung stellen. Bevorzugt wird die aufgenommene Energie zur Nutzung in Form von elektrischer Energie wieder zur Verfügung gestellt. Besonders bevorzugte Energiespeicher sind Akkumulatoren, Batterien oder Kondensatoren. Energiespeicher können überdies eine Kombination einer Vielzahl von Energiespeichern sein, die zu einem Gesamtenergiespeicher zusammengeschlossen sind. Beispielsweise kann ein Energiespeicher eine Vielzahl von wiederaufladbaren Batterien (Akkumulatoren) umfassen, um eine höhere Speicherkapazität oder ein höheres Energieabgabevermögen bereitzustellen.

Das Ermitteln des Fahrzeugtyps kann beispielsweise durch eine optische Erkennungseinheit umfassend eine Kamera und ein Bildanalysesystem erfolgen. Überdies kann der Fahrzeugtyp von einem Speichermedium ausgelesen werden, wobei das Speichermedium vorzugsweise ein RFID Chip ist, welcher beispielsweise am Fahrzeug selbst angebracht sein kann oder tragbar ausgestaltet sein kann. Außerdem kann das auslesbare Speichermedium in eine Chipkarte oder den Fahrzeugschlüssel integriert sein. Des Weiteren soll das Ermitteln des Fahrzeugtyps auch über ein Eingabegerät erfolgen können, welches dem Benutzer die Möglichkeit gibt den Fahrzeugtyp manuell einzugeben.

Das Bereitstellen von Fahrzeugdaten kann vorher, während oder nach der Ermittlung des Fahrzeugtyps und auf vielfältige Weise erfolgen. Die Fahrzeugdaten können beispielsweise bei jedem Vorgang online abgerufen werden oder vorab gespeichert sein. Die Hinterlegung bzw. Speicherung der Fahrzeugdaten kann dabei auf einem zentralen Server erfolgen, auf den mehrere Energiespeicherwechseleinrichtungen zugreifen können oder auf einer lokalen Speichereinrichtung der Energiespeicherwechseleinrichtung erfolgen. Ebenso können die Daten zusammen mit dem Fahrzeugtyp auf dem auslesbaren Speichermedium gespeichert sein, usw.

Daten über die Anordnung des zumindest einen Energiespeichers können neben Positions- und Orientierungsinformationen des Energiespeichers im oder am Fahrzeug, also der Energiespeicherkoordinaten, auch Informationen über die Art und Gestaltung der Energiespeicherabdeckung und der Verriegelung des Energiespeichers im oder am Fahrzeug umfassen. Die Informationen über die Art und Gestaltung der Energiespeicherabdeckung und der Verriegelung des Energiespeichers beinhalten beispielsweise die Anzahl der zur Verriegelung verwendeten Schrauben und deren Typ. Andere Verriegelungsarten wie beispielsweise Bajonettverriegelungen oder Verriegelungen mittels verschiebbarer Riegel sind ebenfalls möglich.

Die Bestimmung von räumlichen Referenzpunkten am Fahrzeug geschieht "offline". Basierend auf den Fahrzeugdaten wird die ungefähre Position des zumindest einen Referenzpunktes im Koordinatensystem der Energiespeicherwechseleinrichtung ermittelt, so dass dieser in einem nächsten Schritt dazu genutzt werden kann, um die genaue und tatsächliche Position des Fahrzeugs zu bestimmen. Die Referenzpunkte sind vom Fahrzeugtyp abhängig und sind vorzugsweise gut messbaren Konturen des Fahrzeugs zugeordnet.

Das Ermitteln der aktuellen Position des Fahrzeugs, anhand von zumindest einem räumlichen Referenzpunkt, kann beispielsweise durch optische Systeme wie Kamerasysteme erfolgen. Regelmäßig ist zur Ermittlung der Position des Fahrzeugs ein Referenzpunkt ausreichend. Durch die Verwendung mehrerer Referenzpunkte ist jedoch vorteilhaft eine genauere Bestimmung der Fahrzeugposition möglich.

Vorzugsweise erfolgt das Ermitteln der aktuellen Position des Fahrzeugs durch Anfahren des zumindest einen räumlichen Referenzpunkts mittels eines taktilen Messmittels. Das taktile Messmittel ist vorzugsweise ein taktiler Manipulator. Ein Manipulator ist dabei ein automatisch geführter, mit drei oder mehr frei programmierbaren Bewegungsachsen ausgerüsteter Mehrzweckmanipulator, der entweder ortsfest oder mobil eingesetzt werden kann. Ein taktiler Manipulator ist ein mit Sensoren ausgestatteter Manipulator, welche Sensoren die Ermittlung von z.B. auf die Achsen des Manipulators wirkenden Kräften und/oder Momenten ermöglichen. Bevorzugt ist der taktile Manipulator ein taktiler Gelenkarmmanipulator bzw. -roboter.

Das Ermitteln der aktuellen Position mittels taktiler Messmittel ist vorteilhaft, da Referenzpunkte auch dann angefahren und gefunden werden können, wenn ungünstige Lichtverhältnisse vorliegen oder die Referenzpunkte durch Verschmutzungen überdeckt sind. Zudem bietet das Anfahren von zumindest einem Referenzpunkt eine sehr genaue Möglichkeit zur Bestimmung der Position des zumindest einem Referenzpunktes. Aus der Position des Referenzpunktes lässt sich in einem weiteren Schritt die Position des Fahrzeugs im Koordinatensystem der Energiespeicherwechseleinrichtung ermitteln und damit auch die genaue Position und Orientierung des zu wechselnden Energiespeichers.

Vorzugsweise erfolgt das Ermitteln der aktuellen Position des Fahrzeugs durch Anfahren des zumindest einen räumlichen Referenzpunkts mittels eines taktilen Manipulators, wobei der taktile Manipulator zumindest einen Einmesskörper umfasst, der über zumindest zwei Anlageflächen verfügt, wobei das Verfahren weiterhin zumindest die folgenden Verfahrensschritte umfasst: Anfahren des räumlichen Referenzpunktes mittels des Einmesskörpers des taktilen Manipulators; und Ausrichten des Einmesskörpers an eine dem Referenzpunkt zugeordnete Kontur des Fahrzeugs, derart, dass die zumindest zwei Anlageflächen in Kontakt mit entsprechenden Flächen der Kontur kommen.

Durch die Gestaltung des Einmesskörpers mit zumindest zwei Anlageflächen kann nicht nur die Position des Referenzpunktes ermittelt werden, sondern auch dessen Orientierung. Die Anlageflächen sind vorteilhaft so gestaltet, dass diese zu einer geeigneten Kontur des Fahrzeugs passen und beispielsweise formschlüssig in oder an diese eingeführt oder angelegt werden können. Geeignete Konturen können beispielsweise am Unterbau des Fahrzeugs, an den Achsen des Fahrzeugs oder an den Bremsscheiben sowie an den Rädern des Fahrzeugs vorliegen. Das Verfahren ist jedoch nicht auf die Nutzung dieser Konturen beschränkt. Vorzugsweise sind die Einmesskörper derart gestaltet, dass das Ausrichten des Einmesskörpers unabhängig vom Fahrzeugtyp und dem Einmesskörper ist. Alternativ können auch für unterschiedliche Fahrzeugtypen unterschiedliche Einmesskörper zur Verfügung gestellt werden. In diesem Fall muss dem taktilen Manipulator, abhängig von den ermittelten Fahrzeugdaten, ein dem Fahrzeug zugeordneter Einmesskörper bereitgestellt werden.

Vorzugsweise wird beim Anfahren des räumlichen Referenzpunktes die Kontaktkraft zwischen dem zumindest einen Referenzpunkt und dem Einmesskörper mittels des taktilen Manipulators bestimmt. Durch das Bestimmen der Kontaktkraft kann die korrekte Ausrichtung des Einmesskörpers ermittelt und/oder gesteuert werden. Eine Überwachung der Kontaktkraft ist weiterhin vorteilhaft, da Beschädigungen am Fahrzeug verhindert werden können, indem das Anfahren des zumindest einen Referenzpunktes abgebrochen wird, wenn ein bestimmter Wert der Kontaktkraft überschritten wird.

Weiterhin bevorzugt können Manipulatoren und insbesondere taktile Manipulatoren weitere Aufgaben beim Wechseln des Energiespeichers des Fahrzeugs übernehmen, die im Folgenden beschrieben werden. Durch die Nutzung taktiler Manipulatoren für mehrere Verfahrensschritte kann der Aufbau der Energiespeicherwechseleinheit "schlank" bzw. platzsparend gehalten werden.

Vorzugsweise umfasst das Verfahren zum Wechseln zumindest eines Energiespeichers eines Fahrzeugs weiter die folgenden Verfahrensschritte:
Lösen einer Verriegelung, die dem zu wechselnden Energiespeicher zugeordnet ist mittels einer Verriegelungs- und Entriegelungseinheit, wobei die Verriegelungs- und Entriegelungseinheit vorzugsweise ein taktiler Manipulator ist; Verriegeln der Verriegelung, die einem geladenen Energiespeicher zugeordnet ist, mittels der Verriegelungs- und Entriegelungseinheit. Nach dem Lösen der Verriegelung kann der Energiespeicher aus dem Fahrzeug entnommen werden. Das Verriegeln stellt sicher, dass der neu eingeführte, geladene Energiespeicher sicher im oder am Fahrzeug verankert ist.

Generell bevorzugt umfasst das Verfahren zum Wechseln eines Energiespeichers eines Fahrzeugs weiter ein Reinigen der elektrischen Kontakte des Fahrzeugs, die zur elektrischen Kontaktierung des Energiespeichers mit dem Fahrzeug dienen, mittels eines Manipulators und vorzugsweise mittels eines taktilen Manipulators.

Das Reinigen der elektrischen Kontakte des Fahrzeugs dient zur Verhinderung von Korrosion und zur sicheren elektrischen Kontaktierung von Energiespeicher und Fahrzeug. Die Reinigung kann neben dem bloßen Entfernen von Verunreinigungen auch die Behandlung der Kontakte des Fahrzeugs mit geeigneten Mitteln wie beispielsweise Kontaktfett umfassen.

Vorzugsweise umfasst das Verfahren zum Wechseln eines Energiespeichers eines Fahrzeugs auch ein Verbinden des Fahrzeugs mit einer netzgebundenen Energiequelle, und zwar zeitlich vor dem Wechseln des zumindest einen zu wechselnden Energiespeichers des Fahrzeugs. Da dem Fahrzeug nach der Entnahme des zu wechselnden Energiespeichers unter Umständen kurzzeitig keine ausreichende elektrische Energiequelle zur Verfügung steht, ist es vorteilhaft vor dem Entfernen des Energiespeichers eine alternative Energiequelle zur Verfügung zu stellen, um die Bordsysteme des Fahrzeugs weiterhin mit Energie versorgen zu können.

Die netzgebundene Energiequelle ist typischer Weise das Stromnetz. Das Verbinden von netzgebundener Energiequelle und Fahrzeug kann über ein Kabel erfolgen und mittels eines Manipulators, vorzugsweise eines taktilen Manipulators ausgeführt werden. Alternativ kann die Energie der netzgebundenen Energiequelle dem Fahrzeug auch drahtlos, beispielsweise über Induktion zugeführt werden.

Vorzugsweise umfasst das Verfahren auch ein Reinigen zumindest des Bereichs des Fahrzeugs, wo der Energiespeicher entnommen werden soll, und ein Trocknen des Bereichs zeitlich vor dem Wechseln des/der Energiespeicher. Durch das Reinigen werden Verunreinigungen von den Referenzpunkten und der Verriegelung beseitigt und so das Referenzieren und Lösen der Verriegelung erleichtert. Überdies wird so verhindert, dass die Energiespeicherhalterung, respektive die elektronischen Kontakte beim Wechselvorgang, verschmutzt werden. Das Trocknen des Bereichs ist vorteilhaft, um im Bereich der elektrischen Kontakte keine Kurzschlüsse oder Kriechströme aufgrund von Feuchtigkeit hervorzurufen. Zudem kann ein Korrodieren der Kontakte vermieden werden.

Die Energiespeicherwechseleinrichtung zum Wechseln zumindest eines Energiespeichers eines Fahrzeugs umfasst:
eine Ermittlungseinheit, welche dazu eingerichtet ist, den Fahrzeugtyp des Fahrzeugs zu ermitteln;
eine Datenbereitstellungseinrichtung, welche dazu eingerichtet ist, Fahrzeugdaten des ermittelten Fahrzeugtyps, umfassend Daten über die Anordnung des Energiespeichers im Fahrzeug, bereitzustellen;
eine Bestimmungseinrichtung, welche dazu eingerichtet ist, räumliche Referenzpunkte am Fahrzeug anhand der Fahrzeugdaten des ermittelten Fahrzeugtyps zu bestimmen;
ein Messmittel, welches dazu eingerichtet ist, die aktuelle Position anhand von zumindest einem Referenzpunkt des Fahrzeugs zu ermitteln;
eine Energiespeicherwechseleinheit, welche dazu eingerichtet ist, zumindest einen zu wechselnden Energiespeicher des Fahrzeugs zu wechseln.

Eine Energiespeicherwechseleinrichtung, welche vor dem eigentlichen Wechseln des Energiespeichers den Fahrzeugtyp des Fahrzeugs ermittelt ist vorteilhaft, da so die Anordnung des Energiespeichers im Fahrzeug schnell bestimmt werden kann. Dies ermöglicht ein schnelles und sicheres Wechseln des Energiespeichers.

Die Ermittlungseinheit kann Systeme umfassen, welche den Fahrzeugtyp selbstständig erkennen können. Alternativ kann die Ermittlungseinheit auch solche Systeme umfassen, welche zur Ermittlung des Fahrzeugtyps eine manuelle Eingabe eines Benutzers oder ein auslesbares Speichermedium nutzen. Das auslesbare Speichermedium kann am Fahrzeug selbst angebracht oder tragbar ausgestaltet sein.

Die Datenbereitstellungseinrichtung stellt Fahrzeugdaten abhängig vom Fahrzeugtyp bereit. Dies kann vor, während oder nach der Ermittlung des Fahrzeugtyps erfolgen. Die Datenbereitstellungseinrichtung kann beispielsweise auf einen zentralen Server zugreifen oder auf einem lokalen Speichermedium gespeicherte Daten abrufen. Alternativ können die Fahrzeugdaten von dem auslesbaren Speichermedium abgerufen werden, auf welchem auch die Daten betreffend den Fahrzeugtyp gespeichert sind.

Die Bestimmungseinrichtung bestimmt aus den Fahrzeugdaten die ungefähre Position des zumindest einen Referenzpunktes im Koordinatensystem der Energiespeicherwechseleinrichtung. Das Messmittel ist dazu geeignet anhand des zumindest einen Referenzpunktes die genaue tatsächliche Position des Referenzpunktes zu ermitteln. Aus der tatsächlichen Position des Referenzpunktes kann dann die genaue Position des Fahrzeugs im Koordinatensystem der Energiespeicherwechseleinrichtung bestimmt werden. Das Messmittel kann auf unterschiedlichen Messverfahren basieren, wie beispielsweise auf optischen Messverfahren. Vorzugsweise ist das Messmittel jedoch ein taktiles Messmittel und besonders bevorzugt ein taktiler Manipulator.

Der taktile Manipulator kann weiter dazu eingerichtet sein, elektrische Kontakte des Fahrzeugs, die zur elektrischen Kontaktierung des Energiespeichers mit dem Fahrzeug dienen, zu reinigen und/oder eine Verriegelung, die dem zu wechselnden Energiespeicher zugeordnet ist, zu verriegeln und/oder zu lösen.

Vorzugsweise weist der taktile Manipulator weiter einen Einmesskörper auf, der über zumindest zwei Anlageflächen verfügt, und der dazu eingerichtet ist, an einer Kontur des Fahrzeugs, welche Kontur zumindest einem Referenzpunkt zugeordnet ist, ausgerichtet zu werden. Der Einmesskörper ist vorzugsweise derart gestaltet, dass er an Konturen des Fahrzeugs angepasst ist und beispielsweise formschlüssig in diese eingeführt oder an diese angelegt werden kann, das heißt, dass die zumindest zwei Anlageflächen in Kontakt mit entsprechenden Flächen der Kontur kommen.

Generell bevorzugt weist die Energiespeicherwechseleinrichtung einen Hubtisch auf, wobei der Hubtisch eine Ausrichteinheit aufweist, welche dazu eingerichtet ist, eine Verriegelungs- und Entriegelungseinheit und/oder eine Entnahmevorrichtung bezüglich der Position des zumindest einen Energiespeichers im Fahrzeug auszurichten, wobei
die Verriegelungs- und Entriegelungseinheit dazu eingerichtet ist, eine Verriegelung, die dem zu wechselnden Energiespeicher zugeordnet ist, zu verriegeln und/oder zu lösen und wobei die
Entnahmevorrichtung dazu eingerichtet ist, den zu wechselnden Energiespeicher vom Fahrzeug zu entnehmen und einen geladenen Energiespeicher dem Fahrzeug zuzuführen.

Durch die Anordnung der Verriegelungs- und Entriegelungseinheit und der Entnahmevorrichtung auf der Ausrichteinheit des Hubtisches kann eine exakte und schnelle Positionierung erfolgen. Die Ausrichteinheit ist dazu eingerichtet die darauf montierten Komponenten, wie beispielsweise die Verriegelungs- und Entriegelungseinheit und/oder die Entnahmevorrichtung, in zumindest zwei Richtungen, bevorzugt in X-und Y-Richtung (also horizontal), zu positionieren. Der Hubtisch ist dazu eingerichtet die Ausrichteinheit in einer dritten Richtung, vorzugsweise der Z-Richtung (also vertikal), zu positionieren. Durch die Anordnung der Verriegelungs- und Entriegelungseinheit und der Entnahmevorrichtung auf der Ausrichteinheit des Hubtisches können die Verfahrensschritte des Lösens und Verriegelns der Verriegelung sowie die Entnahme des Energiespeichers und das Einsetzen des Energiespeichers direkt vom Hubtisch aus erfolgen. Vor der Durchführung der Verfahrensschritte kann der Hubtisch in die gewünschte Arbeitshöhe gebracht und entsprechende Verfahrensschritte durchgeführt werden. Nach Abschluss dieser Verfahrensschritte kann der Hubtisch abgesenkt werden. Dadurch ist ein einmaliges Verfahren des Hubtisches pro Wechselvorgang ausreichend, wodurch die Zeit, welche zum Wechseln des Energiespeichers benötigt wird, reduziert wird. Der Hubtisch kann beispielsweise ein hydraulischer Hubtisch sein. Die Entnahmevorrichtung kann ein Greifer sein, der dazu eingerichtet ist, den Energiespeicher zu greifen und aus seiner Halterung zu entnehmen.

### 4. Kurze Beschreibung der Zeichnungen

Im Folgenden werden bevorzugte Ausführungsformen der Erfindung unter Bezugnahme auf die Zeichnungen im Detail erläutert. Hierbei zeigt:
- Fig. 1: eine schematische Darstellung einer Energiespeicherwechseleinrichtung;
- Fig. 2: eine schematische Darstellung einer Verriegelungs- und Entriegelungseinheit;
- Fig. 3: eine schematische Darstellung einer Reinigungseinheit, und
- Fig. 4: eine schematische Darstellung eines taktilen Messmittels, umfassend einen Einmesskörper.

### 5. Beschreibung der bevorzugten Ausführungsformen

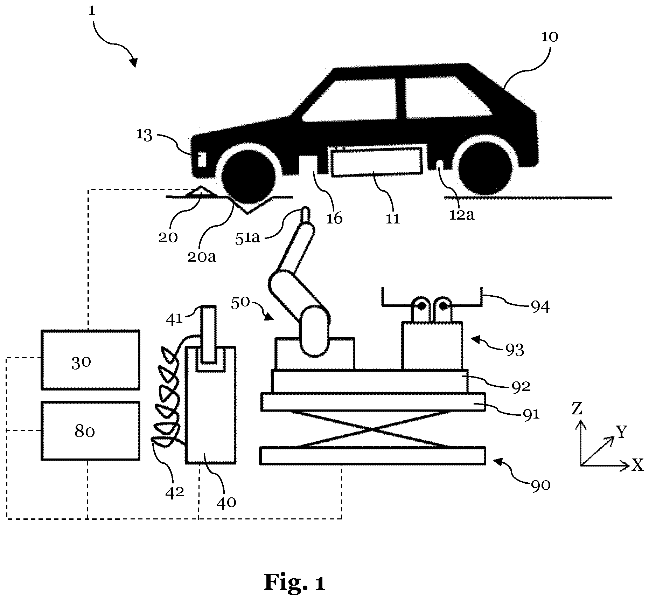

Fig. 1 zeigt eine Energiespeicherwechseleinrichtung 1, welche dazu eingerichtet ist, einen Energiespeicher 11 eines Fahrzeugs 10 zu wechseln. Das Fahrzeug 10 ist ein elektrisch betreibbares Fahrzeug und umfasst zumindest einen Energiespeicher 11. In der vorliegenden Darstellung ist der Energiespeicher 11 an der Unterseite des Fahrzeugs 10 angeordnet.

Zunächst wird das Fahrzeug 10 zu einer Wechselstelle der Energiespeicherwechseleinrichtung 1 gefahren, bis z.B. die Vorderräder des Fahrzeugs an einen mechanischen Anschlag 20a stoßen. Hierdurch ist zumindest die ungefähre relative Position des Fahrzeugs im Koordinatensystem der Energiespeicherwechseleinrichtung vorgegeben. Anschließend wir der Wechselvorgang gestartet. In einem ersten Verfahrensschritt ermittelt eine Ermittlungseinheit 20 den Fahrzeugtyp des Fahrzeugs 10. In der in Fig. 1 gezeigten Darstellung ist der Fahrzeugtyp auf einem auslesbaren Speichermedium 13 gespeichert. Vorzugsweise ist das auslesbaren Speichermedium 13 am Fahrzeug angeordnet. Die Ermittlungseinheit 20 ermittelt den Fahrzeugtyp durch Auslesen des Speichermediums 13. Anschließend stellt eine Datenbereitstellungseinheit 30, entsprechend dem ermittelten Fahrzeugtyp, den verschiedenen Stationen der Energiespeicherwechseleinrichtung 1 Daten bereit, wie dies durch die gestrichelten Linien angedeutet ist. Diese Daten umfassen zumindest Daten über die Anordnung des Energiespeichers 11 im Fahrzeug 10. Weiterhin bestimmt eine Bestimmungseinrichtung 80 anhand des Fahrzeugtyps räumliche Referenzpunkte 12a am Fahrzeug 10.

Um die tatsächliche und genaue Position des Fahrzeugs 10 zu ermitteln, wird wie in Fig. 1 gezeigt der Referenzpunkt 12a mit einem Einmesskörper 51a mittels eines taktilen Messmittel 50 angefahren. In der gezeigten Darstellung ist das taktile Messmittel 50 ein taktiler Manipulator.

Das Wechseln des Energiespeichers 11 des Fahrzeugs 10 erfolgt mittels einer Energiespeicherwechseleinheit 90. Die gezeigte Energiespeicherwechseleinheit 90 umfasst einen Hubtisch 91, eine Ausrichteinheit 92 und eine Entnahmevorrichtung 93, die einen Greifer 94 aufweist. Der Hubtisch 91 ist vorzugsweise ein hydraulischer Hubtisch und kann die Entnahmevorrichtung 93 sowie das taktile Messmittel 50 in der Z-Richtung verfahren. Die Ausrichteinheit 92 ist dazu eingerichtet die Entnahmevorrichtung 93 und/oder das taktile Messmittel 50 in der X-und Y-Richtung zu positionieren. Mittels der Greifer 94 kann der Energiespeicher 11 gegriffen und entnommen werden. Das Einsetzen eines neuen Energiespeichers geschieht analog. Bevorzugt könnte die Ausrichteinheit 92 auch um eine Achse drehbar ausgeführt sein.

Um das in Fig. 1 gezeigte Fahrzeug 10 während des Wechselvorgangs mit elektrischer Energie versorgen zu können, weißt das Fahrzeug 10 eine Steckeraufnahme 16 auf. Die Steckeraufnahme 16 kann einen Stecker 41 einer netzgebundenen Energiequelle 40 aufnehmen. Der Stecker 41 und die netzgebundene Energiequelle 40 sind über ein Kabel 42 miteinander verbunden.

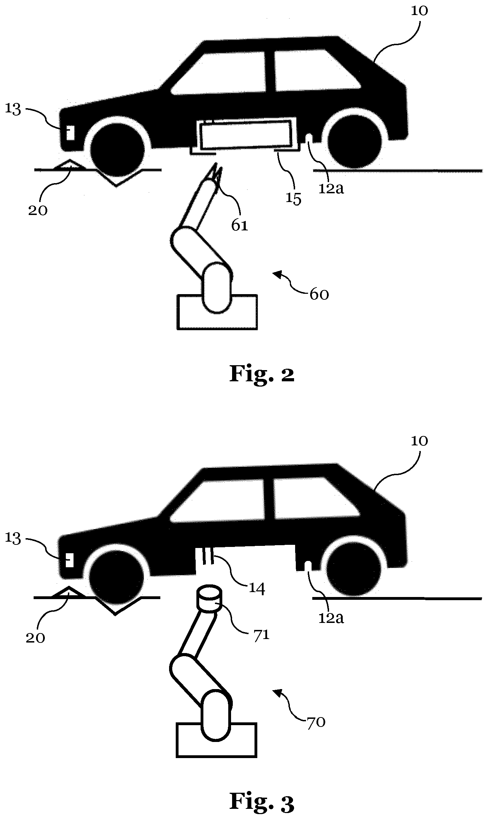

Fig. 2 zeigt eine Verriegelung- und Entriegelungseinheit 60, welche vorzugsweise ein taktiler Manipulator ist. Mittels eines Verriegelungs- und Entriegelungswerkzeug 61 kann die Verriegelung und Entriegelungseinheit 60 die Verriegelung 15 des Energiespeichers 11 des Fahrzeugs 10 lösen und verriegeln. Ausgehend von der ermittelten Position des Fahrzeugs 10 und der Anordnung des Energiespeichers 11, sowie auf Basis der Fahrzeugdaten, kann die Verriegelung- und Entriegelungseinheit 60 die Position der Verriegelung 15 anfahren und diese je nach Art der Verriegelung lösen bzw. verriegeln. Insbesondere kann das Verriegelungs- und Entriegelungswerkzeug 61 entsprechend der Art der Verriegelung getauscht werden.

Fig. 3 zeigt eine Reinigungseinheit 70, welche vorzugsweise ein taktiler Manipulator ist. Mittels eines Reinigungswerkzeugs 71 kann die Reinigungseinheit 70 elektrische Kontakte 14 des Fahrzeugs 10, die zur elektrischen Kontaktierung des Energiespeichers 11 mit dem Fahrzeug 10 dienen, reinigen.

Besonders bevorzugt ist das taktile Messmittel 50, die Verriegelung- und Entriegelungseinheit 60 sowie die Reinigungseinheit 70 ein einziger taktiler Manipulator, welcher dazu eingerichtet ist, zu Messen, zu Ver- und Entriegeln als auch zu Reinigen. Dazu kann der taktile Manipulator je nach Anwendung Einmesskörper 51a; 51b, Verriegelung- und Entriegelungswerkzeuge 61 und Reinigungswerkzeuge 71 aufnehmen und ablegen, d.h. er kann die jeweils benötigten Werkzeuge vorzugsweise automatisch wechseln.

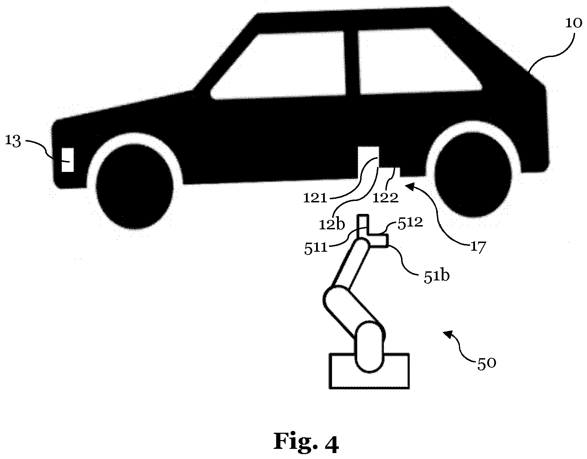

Fig. 4 zeigt ein taktiles Messmittel 50, umfassend einen Einmesskörper 51b, der über zwei Anlageflächen 511, 512 verfügt. Das taktile Messmittel 50 dient zum Ermitteln der aktuellen Position des Fahrzeugs 10 anhand von zumindest einem räumlichen Referenzpunkt 12b. Dem Referenzpunkte 12b ist eine Kontur 17 zugeordnet, welche zwei Flächen 121, 122 aufweist. Zur Ermittlung der aktuellen Position des Fahrzeugs 10 wird der räumliche Referenzpunkt 12b mittels des Einmesskörper 51b des taktilen Messmittels 50 angefahren. Der Einmesskörper 51b wird derart an der, dem Referenzpunkt 12b zugeordneten Kontur 17 ausgerichtet, dass die Anlagefläche 511 mit der Fläche 121 der Kontur 17 und die Anlagefläche 512 mit der Fläche 122 der Kontur 17 in Kontakt kommt. Vorzugsweise wird beim Anfahren des räumlichen Referenzpunktes 12b die Kontaktkraft die auf den Einmesskörper 51b wirkt bestimmt und so die korrekte Ausrichtung des Einmesskörpers 51b ermittelt.

**Bezugszeichenliste**

| | |
|---|---|
| Energiespeicherwechseleinrichtung | 1 |
| Fahrzeug | 10 |
| Energiespeicher | 11 |
| Referenzpunkte | 12a; 12b |
| Konturflächen | 121, 122 |
| Auslesbares Speichermedium | 13 |
| Elektrische Kontakte | 14 |
| Verriegelung | 15 |
| Steckeraufnahme | 16 |
| Kontur | 17 |
| Ermittlungseinheit | 20 |
| Datenbereitstellungseinheit | 30 |
| Netzgebundene Energiequelle | 40 |
| Stecker | 41 |
| Kabel | 42 |
| Taktiles Messmittel | 50 |
| Einmesskörper | 51a; 51b |
| Anlageflächen | 511, 512 |
| Verriegelungs- und Entriegelungseinheit | 60 |
| Verriegelungs- und Entriegelungswerkzeug | 61 |
| Reinigungseinheit | 70 |
| Reinigungswerkzeug | 71 |
| Bestimmungseinrichtung | 80 |
| Energiespeicherwechseleinheit | 90 |
| Hubtisch | 91 |
| Ausrichteinheit | 92 |
| Entnahmevorrichtung | 93 |
| Greifer | 94 |
| mechanischer Anschlag | 20a |

## Patentansprüche

1. Verfahren zum Wechseln zumindest eines Energiespeichers (11) eines Fahrzeugs (10), umfassend die folgenden Verfahrensschritte:
Ermitteln des Fahrzeugtyps;
Bereitstellen von Fahrzeugdaten des ermittelten Fahrzeugtyps, umfassend Daten über die Anordnung des zumindest einen Energiespeichers (11) im Fahrzeug;
Bestimmung von räumlichen Referenzpunkten (12a; 12b) am Fahrzeug (10) anhand der Fahrzeugdaten des ermittelten Fahrzeugtyps;
Ermitteln der aktuellen Position des Fahrzeugs (10) anhand von zumindest einem räumlichen Referenzpunkt (12a; 12b);
Wechseln von zumindest einem zu wechselnden Energiespeicher (11) des Fahrzeugs (10).

2. Verfahren zum Wechseln zumindest eines Energiespeichers (11) eines Fahrzeugs (10) nach Anspruch 1, wobei das Ermitteln der aktuellen Position des Fahrzeugs (10) durch Anfahren des zumindest einen räumlichen Referenzpunktes (12a; 12b) mittels eines taktilen Messmittels (50) erfolgt.

3. Verfahren zum Wechseln zumindest eines Energiespeichers (11) eines Fahrzeugs (10) nach dem vorhergehenden Anspruch, wobei das taktile Messmittel (50) ein taktiler Manipulator ist.

4. Verfahren zum Wechseln zumindest eines Energiespeichers (11) eines Fahrzeugs (10) nach einem der vorhergehenden Ansprüche, wobei das Verfahren weiter die folgenden Verfahrensschritte umfasst:
Lösen einer Verriegelung (15), die dem zu wechselnden Energiespeicher (11) zugeordnet ist mittels einer Verriegelungs- und Entriegelungseinheit (60), wobei die Verriegelungs- und Entriegelungseinheit (60) vorzugsweise ein taktiler Manipulator ist;
Verriegeln der Verriegelung (15), die einem geladenen Energiespeicher (11) zugeordnet ist mittels der Verriegelungs- und Entriegelungseinheit (60).

5. Verfahren zum Wechseln eines Energiespeichers (11) eines Fahrzeugs (10) nach einem der vorhergehenden Ansprüche, wobei das Verfahren weiter den folgenden Verfahrensschritt umfasst:
Reinigen der elektrischen Kontakte (14) des Fahrzeugs (10), die zur elektrischen Kontaktierung des Energiespeichers (11) mit dem Fahrzeug (10) dienen, mittels eines Manipulators (70) und vorzugsweise mittels eines taktilen Manipulators.

6. Verfahren zum Wechseln eines Energiespeichers (11) eines Fahrzeugs (10) nach einem der vorhergehenden Ansprüche, wobei das Verfahren weiter den folgenden Verfahrensschritt umfasst:
Verbinden des Fahrzeugs mit einer netzgebundenen Energiequelle (40), zeitlich vor dem Wechseln des zumindest einen zu wechselnden Energiespeichers (11) des Fahrzeugs (10).

7. Verfahren zum Wechseln zumindest eines Energiespeichers (11) eines Fahrzeugs (10) nach einem der vorhergehenden Ansprüche, wobei
das Ermitteln der aktuellen Position des Fahrzeugs (10) durch Anfahren des zumindest einen räumlichen Referenzpunktes (12a; 12b) mittels eines taktilen Manipulators (50) erfolgt, wobei
der taktile Manipulator (50) zumindest einen Einmesskörper (51a; 51b) umfasst, der über zumindest zwei Anlageflächen (121, 122) verfügt, und das Verfahren weiterhin zumindest die folgenden Verfahrensschritte umfasst:
Anfahren des räumlichen Referenzpunktes (12b) mittels des Einmesskörpers (51b) des taktilen Manipulators (50); und
Ausrichten des Einmesskörpers (51b) an eine dem Referenzpunkt (12b) zugeordnete Kontur (17) des Fahrzeugs (10), derart, dass die zumindest zwei Anlageflächen (121, 122) in Kontakt mit entsprechenden Flächen (511, 512) der Kontur (17) kommen.

8. Verfahren zum Wechseln zumindest eines Energiespeichers (11) eines Fahrzeugs (10) nach Anspruch 7, wobei
beim Anfahren des räumlichen Referenzpunktes (12a; 12b) die Kontaktkraft zwischen dem zumindest einen Referenzpunkt (12a; 12b) und dem Einmesskörper (51a; 51b) mittels des taktilen Manipulators (50) bestimmt wird.

9. Verfahren zum Wechseln zumindest eines Energiespeichers (11) eines Fahrzeugs (10) nach einem der vorhergehenden Ansprüche, wobei das Verfahren weiter die folgenden Verfahrensschritte umfasst:
Reinigen zumindest des Bereichs des Fahrzeugs, wo der Energiespeicher (11) entnommen werden soll, und
Trocknen des Bereichs zeitlich vor dem Wechseln von zumindest einem zu wechselnden Energiespeicher des Fahrzeugs (10).

10. Energiespeicherwechseleinrichtung (1) zum Wechseln zumindest eines Energiespeichers (11) eines Fahrzeugs (10) umfassend:
eine Ermittlungseinheit (20), welche dazu eingerichtet ist, den Fahrzeugtyp des Fahrzeugs (10) zu ermitteln;
eine Datenbereitstellungseinrichtung (30), welche dazu eingerichtet ist, Fahrzeugdaten des ermittelten Fahrzeugtyps, umfassend Daten über die Anordnung des Energiespeichers (11) im Fahrzeug (10), bereitzustellen;
eine Bestimmungseinrichtung (80), welche dazu eingerichtet ist, räumliche Referenzpunkte (12a; 12b) am Fahrzeug (10) anhand der Fahrzeugdaten des ermittelten Fahrzeugtyps zu bestimmen;
ein Messmittel (50), welches dazu eingerichtet ist, die aktuelle Position anhand von zumindest einem Referenzpunkt (12a; 12b) des Fahrzeugs (10) zu ermitteln;
eine Energiespeicherwechseleinheit (90), welche dazu eingerichtet ist, zumindest einen zu wechselnden Energiespeicher (11) des Fahrzeugs (10) zu wechseln.

11. Energiespeicherwechseleinrichtung (1) zum Wechseln zumindest eines Energiespeichers (11) eines Fahrzeugs (10) nach Anspruch 10, wobei das Messmittel (50) ein taktiles Messmittel ist und bevorzugt ein taktiler Manipulator ist.

12. Energiespeicherwechseleinrichtung (1) zum Wechseln zumindest eines Energiespeichers (11) eines Fahrzeugs (10) nach einem der Ansprüche 10 oder 11, wobei die Energiespeicherwechseleinrichtung (1) zumindest einen taktilen Manipulator umfasst und der taktile Manipulator (70) weiter dazu eingerichtet ist elektrische Kontakte (14) des Fahrzeugs (10), die zur elektrischen Kontaktierung des Energiespeichers (11) mit dem Fahrzeug (10) dienen, zu reinigen.

13. Energiespeicherwechseleinrichtung (1) zum Wechseln zumindest eines Energiespeichers (11) eines Fahrzeugs (10) nach einem der Ansprüche 10 bis 12, wobei die Energiespeicherwechseleinrichtung (1) zumindest einen taktilen Manipulator umfasst und der taktile Manipulator (60) weiter dazu eingerichtet ist eine Verriegelung (15), die dem zu wechselnden Energiespeicher (11) zugeordnet ist zu verriegeln und/oder zu lösen.

14. Energiespeicherwechseleinrichtung (1) zum Wechseln zumindest eines Energiespeichers (11) eines Fahrzeugs (10) nach einem der Ansprüche 10 bis 13, wobei die Energiespeicherwechseleinrichtung (1) zumindest einen taktilen Manipulator (50) umfasst, welcher einen Einmesskörper (51b) aufweist, der über zumindest zwei Anlageflächen (121, 122) verfügt, und der dazu eingerichtet ist an einer Kontur (17) des Fahrzeugs (10), welche Kontur (17) zumindest einem Referenzpunkt (12b) zugeordnet ist, ausgerichtet zu werden.

15. Energiespeicherwechseleinrichtung (1) zum Wechseln zumindest eines Energiespeichers (11) eines Fahrzeugs (10) nach einem der Ansprüche 10 bis 14, wobei die Energiespeicherwechseleinheit (90) zumindest
einen Hubtisch (91) umfasst, wobei der Hubtisch (91) eine Ausrichteinheit (92) aufweist, welche dazu eingerichtet ist eine Verriegelungs- und Entriegelungseinheit (60) und/oder eine Entnahmevorrichtung (93) bezüglich der Position des zumindest einen Energiespeicher (11) im Fahrzeug (10) auszurichten, wobei
die Verriegelungs- und Entriegelungseinheit (60) dazu eingerichtet ist eine Verriegelung (15), die dem zu wechselnden Energiespeicher (11) zugeordnet ist zu verriegeln und/oder zu lösen und wobei die
Entnahmevorrichtung (93) dazu eingerichtet ist den zu wechselnde Energiespeicher (11) vom Fahrzeug (10) zu entnehmen und einen geladenen Energiespeicher dem Fahrzeug (10) zuzuführen.

## Claims

1. A method for changing at least one energy store (11) of a vehicle (10), the method comprising:
determining the vehicle type;
providing vehicle data for the determined vehicle type, including data comprising the arrangement of at least one energy store (11) in the vehicle;
determining spatial reference points (12a; 12b) on the vehicle (10) based on the vehicle data of the determined vehicle type;
determining the current position of the vehicle (10) based on at least one of the spatial reference points (12a; 12b); and
changing the at least one energy store (11) of the vehicle (10).

2. The method for changing at least one energy store (11) of a vehicle (10) of claim 1, wherein determining the current position of the vehicle (10) comprises approaching at least one of the spatial reference points (12a; 12b) with a tactile measuring means (50).

3. The method for changing at least one energy store (11) of a vehicle (10) of the preceding claim, wherein the tactile measuring means (50) is a tactile manipulator.

4. The method for changing at least one energy store (11) of a vehicle (10) according to any one of the preceding claims, wherein the method further comprises the following method steps:
unlocking a lock (15) allocated to the energy store (11) to be changed using a locking and unlocking unit (60), wherein the locking and unlocking unit (60) is preferably a tactile manipulator; and
locking the lock (15) allocated to a charged energy store (11) using the locking and unlocking unit (60).

5. The method for changing at least one energy store (11) of a vehicle (10) according to any one of the preceding claims, wherein the method further comprises the following method step:
cleaning electric contacts (14) of the vehicle (10) using a manipulator (70), preferably using a tactile manipulator, wherein the electric contacts provide electrical contact between the energy store (11) and the vehicle (10).

6. The method for changing at least one energy store (11) of a vehicle (10) according to any one of the preceding claims, wherein the method further comprises the following method step:
connecting the vehicle with an on-grid energy source (40) before changing the at least one energy store (11) of the vehicle (10) to be changed.

7. The method for changing at least one energy store (11) of a vehicle (10) according to any one of the preceding claims, wherein determining the current position of the vehicle (10) comprises approaching at least one spatial reference point (12a; 12b) with a tactile manipulator (50), wherein
the tactile manipulator (50) comprises at least one measuring body (51a; 51b) including at least two contact areas (121, 122), and wherein the method further comprises the following method steps:
approaching the spatial reference point (12b) with the measuring body (51b) of the tactile manipulator (50); and
aligning the measuring body (51b) to a contour (17) of the vehicle (10) allocated to the spatial reference point (12b) such that at the least two contact areas (121, 122) come into contact with corresponding areas (511, 512) of the contour (17).

8. The method for changing at least one energy store (11) of a vehicle (10) according to claim 7, wherein upon approaching the spatial reference point (12a; 12b) the contact force between the at least one spatial reference point (12a; 12b) and the measuring body (51a; 51b) is determined by means of the tactile manipulator (50).

9. The method for changing at least one energy store (11) of a vehicle (10) according to any one of the preceding claims, wherein the method further comprises the following method steps:
cleaning at least an area of the vehicle from which the at least one energy store shall be removed; and
drying the area temporally before changing the at least one energy store of the vehicle (10).

10. An energy store changing system (1) for changing at least one energy store (11) of a vehicle (10), the system comprising:
a determination unit (20) configured to determine the vehicle type of the vehicle (10);
a data provision device (30) configured to provide vehicle data associated with the determined vehicle type, the vehicle data comprising data regarding the arrangement of the energy store (11) in the vehicle (10);
a determination device (80) configured to determine spatial reference points (12a; 12b) on the vehicle (10) based on the vehicle data of the determined vehicle type;
a measuring means (50) configured to determine a current position based on at least one reference point (12a; 12b) of the vehicle (10);
an energy store changing unit (90) configured to change the at least one energy store (11) of the vehicle (10).

11. The energy store changing system (1) for changing at least one energy store (11) of a vehicle (10) according to claim 10, wherein the measuring means (50) is a tactile measuring means and preferably a tactile manipulator.

12. The energy store changing system (1) for changing at least one energy store (11) of a vehicle (10) according to any one of claims 10 or 11, wherein the energy store changing system (1) comprises at least one tactile manipulator, and wherein the tactile manipulator (70) is further configured to clean electric contacts (14) of the vehicle (10) which provide electrical contact between the energy store (11) and the vehicle (10).

13. The energy store changing system (1) for changing at least one energy store (11) of a vehicle (10) according to any one of claims 10 to 12, wherein the energy store changing system (1) comprises at least one tactile manipulator, and wherein the tactile manipulator (60) is configured to at least one of lock or unlock a lock (15) allocated to the energy store (11) to be changed.

14. The energy store changing system (1) for changing at least one energy store (11) of a vehicle (10) according to any one of claims 10 to 13, wherein the energy store changing system (1) comprises at least one tactile manipulator, wherein the tactile manipulator comprises a measuring body (51b), including at least two contact areas (121, 122) and being configured to be aligned with a contour (17) of the vehicle (10), wherein the contour (17) is allocated to at least one reference point (12b) on the vehicle (10).

15. The energy store changing system (1) for changing at least one energy store (11) of a vehicle (10) according to any one of claims 10 to 14, wherein the energy store changing unit (90) comprises
at least one lifting table (91), the lifting table (91) comprising at least an alignment unit (92) configured to align a locking and unlocking unit (60) and/or a removal device (93) with respect to the position of the at least one energy store (11) in the vehicle (10);
wherein the locking and unlocking unit (60) is configured to at least one of lock or unlock a lock (15) allocated to the energy store (11) to be changed; and
wherein the removal device (93) is configured to remove the energy store from the vehicle (10) and to supply a charged energy store to the vehicle (10).

## Revendications

1. Procédé de remplacement d'au moins un réservoir d'énergie (11) d'un véhicule (10), comprenant les étapes de procédé suivantes :
détermination du type de véhicule ;
fourniture de données de véhicule du type de véhicule déterminé, comprenant des données sur la disposition du au moins un réservoir d'énergie (11) dans le véhicule ;
détermination de points de référence spatiaux (12a ; 12b) sur le véhicule (10) à l'aide des données de véhicule du type de véhicule déterminé ;
détermination de la position instantanée du véhicule (10) à l'aide d'au moins un point de référence spatial (12a ; 12b) ;
remplacement d'au moins un réservoir d'énergie à remplacer (11) du véhicule (10).

2. Procédé de remplacement d'au moins un réservoir d'énergie (11) d'un véhicule (10) selon la revendication 1, la détermination de la position instantanée du véhicule (10) s'effectuant par approche du au moins un point de référence spatial (12a ; 12b) à l'aide d'un moyen de mesure tactile (50).

3. Procédé de remplacement d'au moins un réservoir d'énergie (11) d'un véhicule (10) selon la revendication précédente, le moyen de mesure tactile (50) étant un manipulateur tactile.

4. Procédé de remplacement d'au moins un réservoir d'énergie (11) d'un véhicule (10) selon une des revendications précédentes, le procédé comprenant en outre les étapes de procédé suivantes :
libération d'un verrouillage (15), qui est associé au réservoir d'énergie à remplacer (11), au moyen d'une unité de verrouillage et de déverrouillage (60), l'unité de verrouillage et de déverrouillage (60) étant de préférence un manipulateur tactile ;
verrouillage du verrouillage (15), qui est associé à un réservoir d'énergie chargé (11), au moyen de l'unité de verrouillage et de déverrouillage (60).

5. Procédé de remplacement d'un réservoir d'énergie (11) d'un véhicule (10) selon une des revendications précédentes, le procédé comprenant en outre l'étape de procédé suivante :
nettoyage des contacts électriques (14) du véhicule (10), qui servent au contactage électrique du réservoir d'énergie (11) avec le véhicule (10), au moyen d'un manipulateur (70) et de préférence au moyen d'un manipulateur tactile.

6. Procédé de remplacement d'un réservoir d'énergie (11) d'un véhicule (10) selon une des revendications précédentes, le procédé comprenant en outre l'étape de procédé suivante :
connexion du véhicule avec une source d'énergie de réseau (40), chronologiquement avant le remplacement du au moins un réservoir d'énergie à remplacer (11) du véhicule (10) .

7. Procédé de remplacement d'au moins un réservoir d'énergie (11) d'un véhicule (10) selon une des revendications précédentes,
la détermination de la position instantanée du véhicule (10) s'effectuant par approche du au moins un point de référence spatial (12a ; 12b) au moyen d'un manipulateur tactile (50),
le manipulateur tactile (50) comprenant au moins un corps de mesure (51a ; 51b) qui dispose d'au moins deux surfaces d'appui (121, 122), et le procédé comprenant en outre au moins les étapes de procédé suivantes :
approche du point de référence spatial (12b) au moyen du corps de mesure (51b) du manipulateur tactile (50) ; et
orientation du corps de mesure (51b) vers un contour (17) du véhicule (10) associé au point de référence (12b), de façon que les au moins deux surfaces d'appui (121, 122) viennent en contact avec des surfaces correspondantes (511, 512) du contour.

8. Procédé de remplacement d'au moins un réservoir d'énergie (11) d'un véhicule (10) selon la revendication 7,
lors de l'approche du point de référence spatial (12a ; 12b), la force de contact entre le au moins un point de référence (12a ; 12b) et un corps de mesure (51a ; 51b) étant déterminée au moyen d'un manipulateur tactile (50).

9. Procédé de remplacement d'au moins un réservoir d'énergie (11) d'un véhicule (10) selon une des revendications précédentes, le procédé comprenant en outre les étapes de procédé suivantes :
nettoyage au moins de la zone du véhicule où le réservoir d'énergie (11) doit être déposé, et
séchage de la zone chronologiquement avant le remplacement d'au moins un réservoir d'énergie à remplacer du véhicule (10).

10. Dispositif de remplacement de réservoir d'énergie (1) pour remplacer au moins un réservoir d'énergie (11) d'un véhicule (10), comprenant :
une unité de détermination (20) qui est agencée pour déterminer le type de véhicule du véhicule (10) ;
un dispositif de fourniture de données (30) qui est agencé pour fournir des données de véhicule du type de véhicule déterminé, comprenant des données sur la disposition du réservoir d'énergie (11) dans le véhicule (10) ;
un dispositif de détermination (80) qui est agencé pour déterminer des points de référence spatiaux (12a ; 12b) sur le véhicule (10) à l'aide des données de véhicule du type de véhicule déterminé ;
un moyen de mesure (50) qui est agencé pour déterminer la position instantanée d'au moins un point de référence (12a ; 12b) du véhicule (10) ;
une unité de remplacement de réservoir d'énergie (90) qui est agencée pour remplacer au moins un réservoir d'énergie à remplacer (11) du véhicule (10).

11. Dispositif de remplacement de réservoir d'énergie (1) pour remplacer au moins un réservoir d'énergie (11) d'un véhicule (10) selon la revendication 10, le moyen de mesure (50) étant un moyen de mesure tactile et, de préférence, un manipulateur tactile.

12. Dispositif de remplacement de réservoir d'énergie (1) pour remplacer au moins un réservoir d'énergie (11) d'un véhicule (10) selon une des revendications précédentes 10 ou 11, le dispositif de remplacement de réservoir d'énergie (1) comprenant au moins un manipulateur tactile, et le manipulateur tactile (70) étant en outre agencé pour nettoyer des contacts électriques (14) du véhicule (10) qui servent au contactage électrique du réservoir d'énergie (11) avec le véhicule (10).

13. Dispositif de remplacement de réservoir d'énergie (1) pour remplacer au moins un réservoir d'énergie (11) d'un véhicule (10) selon une des revendications 10 à 12, le dispositif de remplacement de réservoir d'énergie (1) comprenant au moins un manipulateur tactile, et le manipulateur tactile (60) étant en outre agencé pour verrouiller et/ou libérer un verrouillage (15) qui est associé au réservoir d'énergie à remplacer (11).

14. Dispositif de remplacement de réservoir d'énergie (1) pour remplacer au moins un réservoir d'énergie (11) d'un véhicule (10) selon une des revendications 10 à 13, le dispositif de remplacement de réservoir d'énergie (1) comprenant au moins un manipulateur tactile (50) qui comporte un corps de mesure (51b), lequel dispose d'au moins deux surfaces d'appui (121, 122) et est agencé pour être orienté vers un contour (17) du véhicule (10), ledit contour (17) étant associé au moins à un point de référence (12b).

15. Dispositif de remplacement de réservoir d'énergie (1) pour remplacer au moins un réservoir d'énergie (11) d'un véhicule (10) selon une des revendications 10 à 14, l'unité de remplacement de réservoir d'énergie (90) comprenant au moins
une table élévatrice (91), la table élévatrice (91) comportant une unité d'orientation (92) qui est agencée pour orienter une unité de verrouillage et de déverrouillage (60) et/ou un dispositif de dépose (93) par rapport à la position du au moins un réservoir d'énergie (11) dans le véhicule (10),
l'unité de verrouillage et de déverrouillage (60) étant agencée pour verrouiller et/ou libérer un verrouillage (15) qui est associé au réservoir d'énergie à remplacer (11), et le
dispositif de dépose (93) étant agencé pour déposer le réservoir d'énergie à remplacer (11) du véhicule (10) et pour amener au véhicule (10) un réservoir d'énergie chargé.
